# EUROPEAN PATENT APPLICATION

(11) **EP 4 002 903 A1**
(43) Date of publication of application: **25.05.2022**
(21) Application number: 20850543.8
(22) Date of filing: 17.07.2020
(51) Int. Cl.: H04W 12/12

(54) **METHOD FOR COMMUNICATION AND DEVICE**

(30) Priority: 02.08.2019 CN 201910713891
(71) Applicant: Huawei Technologies Co., Ltd., Longgang Shenzhen, Guangdong 518129 (CN)
(72) Inventor: GENG, Tingting, Shenzhen, Guangdong 518129 (CN); YAN, Le, Shenzhen, Guangdong 518129 (CN); ZHANG, Hongping, Shenzhen, Guangdong 518129 (CN)
(74) Representative: Isarpatent
(86) International application number: PCT/CN2020/102593
(87) International publication number: WO 2021/022991

(57) **Abstract**

This application provides a communication method and apparatus, to help improve efficiency of identifying a fake base station. The method includes: A terminal device receives configuration information sent by a network device, and then simultaneously measures, based on the configuration information, a channel state information-reference signal CSI-RS and a synchronization signal block SSB that are sent by a cell. When determining that a measurement result of the CSI-RS and a measurement result of the SSB of the cell satisfy a preset condition, the terminal device reports a measurement report to the network device, where the measurement report includes identification information of the cell, so that the network device identifies a fake base station.

## Description

This application claims priority to Chinese Patent Application No. 201910713891.8, filed with the China National Intellectual Property Administration on August 2, 2019 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

A fake base station on a network may disguise itself as a normal base station to send a normal radio signal. When measuring a target cell, a terminal device may measure a cell served by the fake base station, and report a measurement result of the fake cell to a serving base station. After making a handover decision based on the measurement result, the serving base station may hand over the terminal device to the fake cell, resulting in a handover failure. Consequently, a service of the terminal device is interrupted, and service experience of the terminal device deteriorates.

Currently, it takes a long time to identify a fake base station in a conventional technology. Therefore, a method urgently needs to be provided to improve efficiency of identifying the fake base station.

### SUMMARY

In view of this, this application provides a communication method and apparatus, to help improve efficiency of identifying a fake base station.

According to a first aspect, a communication method is provided. The method includes:

First, a terminal device receives configuration information from a first network device; then, the terminal device measures, based on the configuration information, a channel state information-reference signal CSI-RS and a synchronization signal block SSB that are sent by a first cell; the terminal device determines that a measurement result of the CSI-RS and a measurement result of the SSB of the first cell satisfy a preset condition; and finally, the terminal device sends a first report to the first network device, where the first report includes identification information of the first cell. In this way, the terminal device simultaneously measures the CSI-RS and the SSB that are sent by the first cell, and reports the first report to the first network device when the measurement result of the CSI-RS and the measurement result of the SSB satisfy the preset condition. This helps the first network device identify a fake base station.

Optionally, the first report further includes the measurement result of the CSI-RS and/or the measurement result of the SSB of the first cell. Herein, the terminal device may report the measurement result of the CSI-RS and/or the measurement result of the SSB to the first network device, so that the first network device identifies the fake base station with reference to the measurement results.

Optionally, that a measurement result of the CSI-RS and a measurement result of the SSB satisfy a preset condition includes: A difference between a measurement value of the CSI-RS and a measurement value of the SSB satisfies a difference threshold.

Optionally, the configuration information includes the difference threshold. Therefore, the terminal device can obtain the difference threshold from the configuration information.

In a possible implementation, the method further includes:
The terminal device receives system information from the first network device, where the system information includes the difference threshold. Therefore, the terminal device can obtain the difference threshold from the system information.

Optionally, that a measurement result of the CSI-RS and a measurement result of the SSB satisfy a preset condition includes:
A measurement value of the SSB satisfies a first quality threshold; and a measurement value of the CSI-RS satisfies a second quality threshold. Therefore, a difference between the measurement value of the SSB and the measurement value of the CSI-RS may not be compared. If the measurement value of the SSB and the measurement value of the CSI-RS satisfy respective quality thresholds, it may also be considered that the preset condition is satisfied. For example, the SSB is greater than the first quality threshold, and the CSI-RS is less than the second quality threshold.

Optionally, the configuration information includes the first quality threshold and the second quality threshold. Therefore, the terminal device can obtain the first quality threshold and the second quality threshold from the configuration information.

In a possible implementation, the method further includes: The terminal device receives system information from the first network device, where the system information includes the first quality threshold and the second quality threshold. Therefore, the terminal device can obtain the first quality threshold and the second quality threshold from the system information.

In a possible implementation, the measurement value is any one of the following:
received signal code power RSCP, reference signal received power RSRP, reference signal received quality RSRQ, a signal-to-noise ratio SNR, a signal to interference plus noise ratio SINR, and a reference signal strength indication RSSI.

A measurement value type of the CSI-RS is the same as a measurement value type of the SSB.

According to a second aspect, a communication method is provided. The method includes:
First, a first network device sends configuration information to a terminal device, where the configuration information is used to configure the terminal device to measure a channel state information-reference signal CSI-RS and a synchronization signal block SSB that are sent by a first cell; then, the first network device receives a first report from the terminal device, where the first report includes identification information of the first cell, and a measurement result of the CSI-RS and a measurement result of the SSB of the first cell satisfy a preset condition. In this way, the first network device can obtain the identification information of the first cell whose measurement results satisfy the preset condition, to perform identification based on the identification information of the first cell.

Optionally, the first report further includes the measurement result of the CSI-RS and the measurement result of the SSB of the first cell. Herein, if the first report further includes the measurement result of the CSI-RS and the measurement result of the SSB, the first network device may perform further determining with reference to the measurement result of the CSI-RS and the measurement result of the SSB.

In a possible implementation, the method further includes:
The first network device determines, based on the first report, that a second network device corresponding to the first cell is a fake base station. Herein, the first network device may determine, based on the first report, that the second network device corresponding to the first cell is the fake base station, to effectively identify the fake base station.

Optionally, that a measurement result of the CSI-RS and a measurement result of the SSB satisfy a preset condition includes: A difference between a measurement value of the CSI-RS and a measurement value of the SSB satisfies a difference threshold.

Optionally, the configuration information includes the difference threshold. Therefore, the first network device can send the difference threshold to the terminal device by using the configuration information.

In a possible implementation, the method further includes: The first network device sends system information, where the system information includes the difference threshold. Therefore, the first network device can send the difference threshold to the terminal device by using the system information.

Optionally, that a measurement result of the CSI-RS and a measurement result of the SSB satisfy a preset condition includes:

A measurement value of the SSB satisfies a first quality threshold; and a measurement value of the CSI-RS satisfies a second quality threshold.

For example, the measurement value of the SSB is greater than the first quality threshold, and the measurement value of the CSI-RS is less than the second quality threshold.

Optionally, the configuration information includes the first quality threshold and the second quality threshold. Therefore, the first network device can send the first quality threshold and the second quality threshold to the terminal device by using the configuration information.

In a possible implementation, the method further includes:

The first network device sends system information, where the system information includes the first quality threshold and the second quality threshold. Therefore, the first network device can send the first quality threshold and the second quality threshold to the terminal device by using the system information.

Optionally, the measurement value is any one of the following:
received signal code power RSCP, reference signal received power RSRP, reference signal received quality RSRQ, a signal-to-noise ratio SNR, a signal to interference plus noise ratio SINR, and a reference signal strength indication RSSI.

A measurement value type of the CSI-RS is the same as a measurement value type of the SSB.

In a possible implementation, the method further includes: The first network device receives CSI-RS configuration information from a third network device. Therefore, the first network device can receive the CSI-RS configuration information sent by the third network device, so that the first network device can send the CSI-RS configuration information to the terminal device.

According to a third aspect, a communication method is provided. The method includes:

First, a terminal device receives a first message from a first network device, where the first message is used to indicate the terminal device to be handed over to a target cell; then, the terminal device determines that a connection failure occurs; the terminal device determines indication information, where the indication information is used by the first network device to determine a type of a measurement result of a cell measured by the terminal device, and the type of the measurement result includes a channel state information-reference signal CSI-RS-based measurement result type or a synchronization signal block SSB-based measurement result type; and finally, the terminal device sends the indication information to the first network device, to assist the first network device in identifying an RLF report based on the indication information.

In a possible implementation, that the terminal device sends the indication information to the first network device includes:
The terminal device sends the indication information to the first network device through a second network device, where the second network device is a serving network device of the terminal device. Therefore, the terminal device can send the indication information to the second network device, and then the second network device sends the indication information to the first network device.

In a possible implementation, that the terminal device sends the indication information to the first network device through a second network device includes:
The terminal device sends the indication information to the first network device through the second network device and a third network device, where the third network device is a network device in which a connection failure occurs and to which the target cell belongs. Therefore, the terminal device can send the indication information to the second network device, then the second network device sends the indication information to the third network device, and finally the third network device sends the indication information to the first network device.

Optionally, the indication information is carried in a mobility robustness optimization MRO report or a radio link failure RLF report.

Optionally, the RLF report further includes location information when the terminal device fails to be handed over to the cell and/or a failure type, where the failure type includes a handover failure HOF and/or a radio link failure RLF.

According to a fourth aspect, a communication method is provided. The method includes:
First, a first network device sends a first message to a terminal device, where the first message is used to indicate the terminal device to be handed over to a target cell; then, the first network device receives indication information, where the indication information is used to determine a type of a measurement result of a cell measured by the terminal device, and the type of the measurement result includes a CSI-RS-based measurement result type or an SSB-based measurement result type. In this way, the first network device can identify an RLF report based on the indication information.

In a possible implementation, the method further includes:
The first network device identifies the RLF report based on the indication information.

Optionally, the measurement result of the cell is an SSB-based measurement result. That the first network device identifies the RLF report based on the indication information includes: The first network device identifies the RLF report based on location information when the terminal device fails to be handed over to the cell and/or a failure type, where the failure type includes a handover failure HOF and/or a radio link failure RLF. Herein, if the measurement result of the cell is the SSB-based measurement result, the first network device further needs to determine the RLF report with reference to the location information and/or the failure type.

Optionally, the measurement result of the cell is a CSI-RS-based measurement result. That the first network device identifies the RLF report based on the indication information includes: The first network device determines that the RLF report is a report generated when the terminal device fails to be handed over to the target cell. Herein, if the measurement result of the cell is the CSI-RS-based measurement result, the first network device may identify that the RLF report is the report generated when the terminal device fails to be handed over to the target cell, but is not a report generated when a handover fails due to a fake base station.

In a possible implementation, that the first network device receives indication information includes:
The first network device receives the indication information from the terminal device. Herein, the first network device may directly receive the indication information sent by the terminal device, and the indication information does not need to be forwarded by another network device.

In a possible implementation, that the first network device receives indication information includes:
The first network device receives the indication information from a second network device, where the second network device is a serving network device of the terminal device, and the indication information is sent by the terminal device to the second network device; or
the first network device receives the indication information from a third network device, where the indication information is sent by a second network device to the third network device, the second network device is a serving network device of the terminal device, and the third network device is a network device in which a connection failure occurs and to which the target cell belongs. Herein, the first network device may receive the indication information forwarded by another network device, but the terminal device does not directly send the indication information to the first network device.

Optionally, the indication information is carried in the RLF report.

Optionally, the RLF report further includes the location information when the terminal device fails to be handed over to the cell and/or the failure type, where the failure type includes a handover failure HOF and/or a radio link failure RLF.

According to a fifth aspect, a communication apparatus is provided. The communication apparatus includes modules configured to perform the method according to any one of the first aspect or the possible implementations of the first aspect; or includes modules configured to perform the method according to any one of the third aspect or the possible implementations of the third aspect.

According to a sixth aspect, a communication apparatus is provided. The communication apparatus includes modules configured to perform the method according to any one of the second aspect or the possible implementations of the second aspect; or includes modules configured to perform the method according to any one of the fourth aspect or the possible implementations of the fourth aspect.

According to a seventh aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect or the possible implementations of the first aspect by using a logic circuit or executing code instructions, or the processor is configured to implement the method according to any one of the third aspect or the possible implementations of the third aspect by using a logic circuit or executing code instructions.

According to an eighth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the second aspect or the possible implementations of the second aspect by using a logic circuit or executing code instructions, or the processor is configured to implement the method according to any one of the fourth aspect or the possible implementations of the fourth aspect by using a logic circuit or executing code instructions.

According to a ninth aspect, a computer-readable storage medium is provided. The computer-readable storage medium stores a computer program or instructions. When the computer program or the instructions is/are executed, the method according to any one of the first aspect or the possible implementations of the first aspect is implemented, or the method according to any one of the third aspect or the possible implementations of the third aspect is implemented.

According to a tenth aspect, a computer-readable storage medium is provided. The computer-readable storage medium stores a computer program or instructions. When the computer program or the instructions is/are executed, the method according to any one of the second aspect or the possible implementations of the second aspect is implemented, or the method according to any one of the fourth aspect or the possible implementations of the fourth aspect is implemented.

According to an eleventh aspect, a computer program product including instructions is provided. When the instructions are run, the method according to any one of the first aspect or the possible implementations of the first aspect is implemented, or the method according to any one of the third aspect or the possible implementations of the third aspect is implemented.

According to a twelfth aspect, a computer program product including instructions is provided. When the instructions are run, the method according to any one of the second aspect or the possible implementations of the second aspect is implemented, or the method according to any one of the fourth aspect or the possible implementations of the fourth aspect is implemented.

According to a thirteenth aspect, a communication chip is provided. The communication chip stores instructions. When the instructions are run on a computer device, the communication chip is enabled to perform the method according to any possible implementation of the first aspect to the fourth aspect.

According to a fourteenth aspect, a communication system is provided. The communication system includes the communication apparatus according to the fifth aspect and the communication apparatus according to the sixth aspect.

According to a fifteenth aspect, a communication system is provided. The communication system includes the communication apparatus according to the seventh aspect and the communication apparatus according to the eighth aspect.

### BRIEF DESCRIPTION OF DRAWINGS

FIG. 1 is a schematic diagram of a system architecture to which an embodiment of this application is applied;
FIG. 2 is a schematic diagram of a scenario in which a fake base station exists;
FIG. 3 is a schematic interaction diagram of a communication method according to an embodiment of this application;
FIG. 4 is a schematic diagram of an example to which an embodiment of this application is applied;
FIG. 5 is a schematic interaction diagram of a communication method according to another embodiment of this application;
FIG. 6 is a schematic diagram of another example of a fake base station scenario;
FIG. 7 is a schematic diagram of an example to which another embodiment of this application is applied;
FIG. 8 is a schematic diagram of a fake base station detection method to which still another embodiment of this application is applied;
FIG. 9 is a schematic block diagram of a communication apparatus according to an embodiment of this application;
FIG. 10 is a schematic diagram of a structure of a terminal device according to an embodiment of this application; and
FIG. 11 is a schematic diagram of a structure of a network device according to an embodiment of this application.

### DESCRIPTION OF EMBODIMENTS

The following describes technical solutions of this application with reference to accompanying drawings.

In embodiments of this application, "a plurality of' may be understood as "at least two"; and "a plurality of items" may be understood as "at least two items".

The technical solutions in the embodiments of this application may be applied to various communication systems, for example, a long term evolution (long term evolution, LTE) system, a new radio (new radio, NR) system in a 5th generation (5th generation, 5G) mobile communication system, and a future mobile communication system.

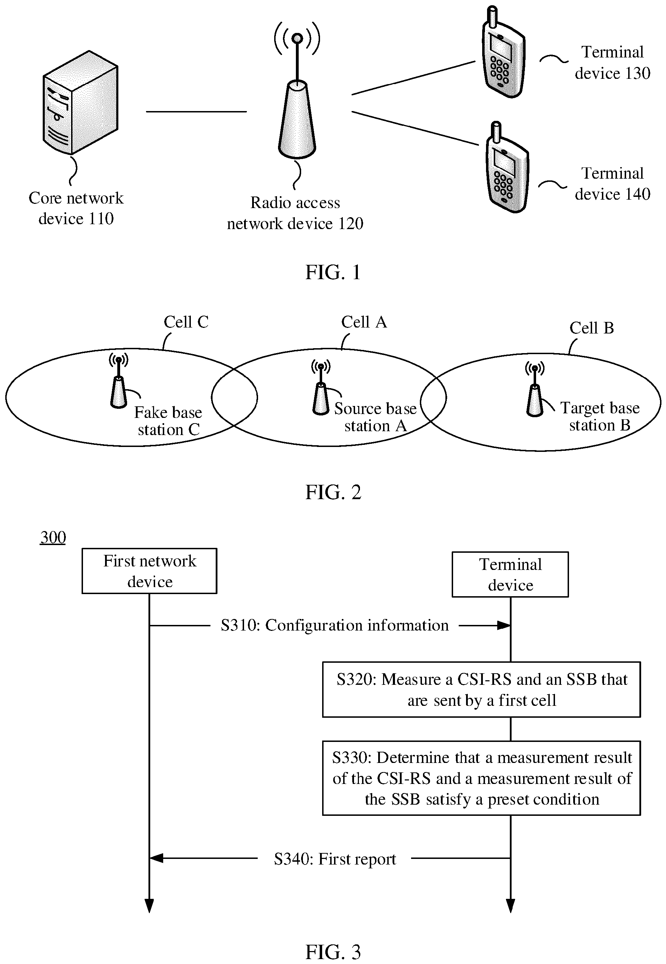

FIG. 1 is a schematic diagram of an architecture of a mobile communication system to which an embodiment of this application is applied. As shown in FIG. 1, the mobile communication system includes a core network device 110, a radio access network device 120, and at least one terminal device (for example, a terminal device 130 and a terminal device 140 in FIG. 1). The terminal device is connected to the radio access network device in a wireless manner, and the radio access network device is connected to the core network device in a wireless or wired manner. The core network device and the radio access network device may be independent and different physical devices, or a function of the core network device and a logical function of the radio access network device may be integrated into a same physical device, or some functions of the core network device and some functions of the radio access network device may be integrated into one physical device. The terminal device may be at a fixed location, or may be mobile. FIG. 1 is only a schematic diagram. The communication system may further include another network device, for example, may further include a wireless relay device and a wireless backhaul device, which are not shown in FIG. 1. A quantity of core network devices, a quantity of radio access network devices, and a quantity of terminal devices included in the mobile communication system are not limited in this embodiment of this application.

The radio access network (radio access network, RAN) device is an access device that is used by the terminal device to access the mobile communication system in a wireless manner. The radio access network device may be a NodeB (NodeB), an evolved NodeB (evolved NodeB, eNB), a next generation NodeB (next generation NodeB, gNB) in a 5G mobile communication system, a transmission point, a base station in a future mobile communication system, an access node in a wireless fidelity (wireless fidelity, Wi-Fi) system, or an antenna panel or a group of antenna panels (including a plurality of antenna panels) of a base station in a 5G system; or may be a network node, for example, a baseband unit (baseband unit, BBU), a distributed unit (distributed unit, DU), a centralized unit (centralized unit, CU), a centralized unit control plane (centralized unit control plane, CU-CP), a centralized unit user plane (centralized unit user plane, CU-UP), that constitutes a gNB or a transmission point. A specific technology and a specific device form used by the radio access network device are not limited in the embodiments of this application. In some deployments, the gNB may include a CU and a DU. One CU may be connected to one DU, or a plurality of DUs share one CU, to reduce costs and facilitate network expansion. The CU implements some functions of the gNB, and the DU implements some functions of the gNB. For example, the CU is responsible for processing a non-real-time protocol and service, to implement functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a media access control (media access control, MAC) layer, and a physical (physical, PHY) layer. Division of the CU and the DU may be performed based on a protocol stack. The protocol stack division manner is not completely limited in the embodiments of this application, and there may be another division manner. For details, refer to the TR38.801 v14.0.0.

The CU and the DU are connected through an F1 interface. The CU indicates that the gNB is connected to the core network through an Ng interface. Further, the centralized unit CU may be further divided into a control plane (CU-CP) and a user plane (CU-UP). The CU-CP is responsible for a control plane function, and mainly includes RRC and a packet data convergence protocol control (packet data convergence protocol control, PDCP-C) plane. The PDCP-C is mainly responsible for at least one function of data encryption and decryption, integrity protection, data transmission, and the like on a control plane. The CU-UP is responsible for a user plane function, and mainly includes a service data adaptation protocol (service data adaptation protocol, SDAP) and a packet data convergence protocol user (packet data convergence protocol user, PDCP-U) plane. The SDAP is mainly responsible for processing data of a core network and mapping a flow to a bearer. The PDCP-U layer is mainly responsible for at least one function of encryption and decryption, integrity protection, header compression, serial number maintenance, data transmission, and the like on a data plane. The CU-CP is connected to the CU-UP through an El interface. The CU-CP indicates that the gNB is connected to the core network through an Ng interface. The CU-CP is connected to the DU through an F1-C (control plane) interface. The CU-UP is connected to the DU through an F1-U (user plane) interface. Certainly, in another possible implementation, the PDCP-C is alternatively in the CU-UP.

The gNB may further include an active antenna unit (active antenna unit, AAU). The AAU implements some processing functions of the physical layer, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that a network device may be a device including one or more of a CU node, a DU node, a CU-CP node, a CU-UP node, and an AAU node. In addition, the CU may be used as a network device in an access network, or may be used as a network device in a core network (core network, CN). This is not limited in this application.

The terminal device may also be referred to as a terminal (Terminal), user equipment (user equipment, UE), a mobile station (mobile station, MS), a mobile terminal (mobile terminal, MT), or the like. The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used by the terminal device are not limited in the embodiments of this application.

The radio access network device and the terminal device may be deployed on land, including being deployed indoor or outdoor, or being handheld or vehicle-mounted; may be deployed on water; or may be deployed on an airplane, a balloon, and a satellite in the air. Application scenarios of the radio access network device and the terminal device are not limited in the embodiments of this application.

The embodiments of this application may be applied to downlink signal transmission, or may be applied to uplink signal transmission, or may be applied to device-to-device (device-to-device, D2D) signal transmission. For the downlink signal transmission, a sending device is a radio access network device, and a corresponding receiving device is a terminal device. For the uplink signal transmission, a sending device is a terminal device, and a corresponding receiving device is a radio access network device. For the D2D signal transmission, a sending device is a terminal device, and a corresponding receiving device is also a terminal device. A signal transmission direction is not limited in the embodiments of this application.

Communication between the radio access network device and the terminal device and communication between the terminal devices may be performed by using a licensed spectrum (licensed spectrum), or an unlicensed spectrum (unlicensed spectrum), or both a licensed spectrum and an unlicensed spectrum. Communication between the radio access network device and the terminal device and communication between the terminal devices may be performed by using a spectrum below 6 gigahertz (gigahertz, GHz), or a spectrum above 6G, or both a spectrum below 6G and a spectrum above 6G. Spectrum resources used for the radio access network device and the terminal device are not limited in the embodiments of this application.

In the embodiments of this application, unless otherwise specified, the network device is a radio access network device. The terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in the embodiments of this application is not specifically limited in the embodiments of this application provided that a program that records code for the method provided in the embodiments of this application can be run to perform communication according to the method provided in the embodiments of this application. For example, the execution body of the method provided in the embodiments of this application may be the terminal device, the network device, or a function module that is in the terminal device or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable device, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to radio channels and various other media that can store, include, and/or carry instructions and/or data.

In NR, the terminal device may perform measurement based on a synchronization signal/physical broadcast channel block (synchronization signal/physical broadcast channel block, SSB). A cell may send the SSB. The terminal device may measure the cell based on the received SSB. The SSB is sent in a broadcast mode, has poor security protection, and is easy to replicate. Therefore, the SSB is easily replicated by a fake base station for disguise. FIG. 2 is a schematic diagram of a scenario in which a fake base station exists. As shown in FIG. 2, a fake base station C replicates SSB information sent by a cell B (which may be referred to as a real cell) served by a real base station B. When a source base station A configures UE to measure an SSB of the base station B, the UE located in overlapping coverage of the base station A and the fake base station C may measure an SSB sent by a fake cell served by the fake base station C, and report a measurement report to the base station A. It may be understood that the fake base station is a device that is not authorized by a network device. Therefore, an interface between network devices cannot be established between the fake base station and a real network device. For example, the fake base station cannot exchange information with the real base station through an X2/Xn interface. The fake base station cannot exchange information with a core network device through an S1/NG interface. If the fake base station is a DU, the fake base station cannot exchange information with the real base station CU through an F1 interface.

A channel state information-reference signal (channel state information-reference signal, CSI-RS) is configured for a terminal device by using dedicated signaling, and a design of the signal is complex. Therefore, the signal cannot be replicated by the fake base station. To avoid being handed over to the fake base station, the source base station may configure the terminal device to measure a CSI-RS of a cell served by a target base station, and make a handover decision based on a CSI-RS-based measurement report. In this manner, a plurality of target base stations need to send CSI-RSs, and resource overheads are high. In addition, it may be considered that after the terminal device reports an SSB-based measurement report, the base station may configure the terminal device to measure the channel state information-reference signal CSI-RS of the target cell again. This manner for avoiding the fake base station takes a long time, and a handover may fail. According to the communication method in the embodiments of this application, a fake base station can be pre-identified, to improve handover efficiency.

For ease of understanding, terms or concepts that may be used in the embodiments of this application are first described before the embodiments of this application are described.

In a mobility robustness optimization (mobility robustness optimization, MRO) mechanism, a terminal device records parameters (for example, parameters that are of cells and that are experienced in a mobility failure process and time information) in the mobility failure process, and reports the parameters to a network device, so that the network device can determine a cell in which a failure occurs, to better adjust a handover-related parameter.

In an example, an MRO record report (which may be referred to as a radio link failure (radio link failure, RLF) report) may include at least one of the following:
(1) Failed primary cell identifier (failedPcellId): information about a primary cell in which a connection fails, where the failure is detected by the terminal device, or information about a target primary cell to which a handover fails.
   Optionally, the failure report may alternatively not include the failed primary cell identifier (failedPcellId), but include a failed cell identifier (failedCellId). The failed cell identifier is information about a cell in which a connection fails, where the failure is detected by the terminal device, or information about a target cell to which a handover fails. This is not limited in the embodiments of this application.
(2) Connection failure type (connectionFailureType).
   For example, the connection failure type may be an RLF or a handover failure (handover failure, HOF).
(3) Previous primary cell identifier (previousPcellId): information about a previous primary cell in which the terminal device receives a handover command last time.
   Optionally, the failure report may alternatively not include the previous primary cell identifier (previousPcellId), but include a previous cell identifier (previousCellId). The previous cell identifier is information about a previous cell in which the terminal device receives a handover command last time. This is not limited in the embodiments of this application.
(4) Reestablishment cell identifier (reestablishmentCellId): information about a cell in which reestablishment is attempted after a connection fails.
(5) Time of a connection failure (timeConnFailure): time since receiving a handover (handover, HO) command last time to a time point at which a connection fails.
(6) Time since a failure (timeSinceFailure): a time length that starts to be recorded since the connection fails. The time since the failure usually refers to time since the connection fails to reporting the failure report.

In an example, the failure report may be an RLF report (RLF report). This is not limited in the embodiments of this application.

A cell identifier may include at least one of a cell global identifier (cell global identifier, CGI), a physical cell identifier (physical cell identifier, PCI), a cell frequency, and a cell identifier (cell identifier) of a cell.

Optionally, the information about the cell mentioned above may further include at least one of a measurement result of cell quality, frequency information, and a beam identifier. The measurement result of the cell quality includes downlink signal quality measured by the terminal device. The downlink signal quality may be represented by one or more of the following indicators: received signal code power (received signal code power, RSCP), reference signal received power (reference signal received power, RSRP), reference signal received quality (reference signal received quality, RSRQ), a signal-to-noise ratio (signal-to-noise ratio, SNR), a signal to interference plus noise ratio (signal to interference plus noise ratio, SINR), a reference signal strength indication (reference signal strength indication, RSSI), or another indicator used to represent the signal quality. RSSI, RSRP, and RSRQ are cell measurement parameters and are rough cell signal estimation. RSRP is the arithmetic average of received power of reference signals in a measurement bandwidth. RSSI is the arithmetic average of total power (useful signal energy+interference+noise) of all RBs in the measurement bandwidth. RSRQ=N×RSRP/RSSI. SINR is a parameter used to accurately evaluate a demodulation capability of the terminal device, and parameters such as modulation and decoding are considered.

CSI-RS configuration information may be an identifier or a resource of a CSI-RS, and a signal location of a measured CSI-RS may be determined based on the CSI-RS configuration information.

In the embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

FIG. 3 is a schematic interaction diagram of a communication method 300 according to an embodiment of this application. As shown in FIG. 3, the method 300 includes the following steps.

S310: A first network device sends configuration information to a terminal device, where the configuration information is used to configure the terminal device to measure a channel state information-reference signal CSI-RS and a synchronization signal block SSB that are sent by a first cell. Correspondingly, the terminal device receives the configuration information from the first network device. The first cell is a cell served by a second network device. The second network device is a network device different from the first network device.

Specifically, the first network device may introduce a new measurement event, and the measurement event is simultaneously measuring the CSI-RS and the SSB. For example, the measurement event is named A7, and configuration information of the measurement event is sent to the terminal device. In other words, the configuration information sent by the first network device to the terminal device is used to configure the terminal device to simultaneously measure the CSI-RS and the SSB that are sent by the first cell.

Optionally, the first network device may be a source network device.

S320: The terminal device measures, based on the configuration information, the channel state information-reference signal CSI-RS and the synchronization signal block SSB that are sent by the first cell.

Herein, the terminal device may simultaneously measure the CSI-RS and the SSB that are sent by the first cell. If the second network device is a fake base station, there is a low possibility that the cell served by the second network device sends the CSI-RS. The terminal device may determine whether a measurement result of the CSI-RS and a measurement result of the SSB measured by the terminal device satisfy a preset condition.

S330: The terminal device determines that the measurement result of the CSI-RS and the measurement result of the SSB of the first cell satisfy the preset condition.

It should be understood that the preset condition may be predefined, or may be configured by the first network device. This is not limited.

Optionally, in an implementation, that a measurement result of the CSI-RS and a measurement result of the SSB measured by the terminal device satisfy a preset condition includes: A difference between a measurement value of the CSI-RS and a measurement value of the SSB satisfies a difference threshold. For example, the difference between the measurement value of the CSI-RS and the measurement value of the SSB is greater than the difference threshold. It may be understood that a measurement value type of the CSI-RS is the same as a measurement value type of the SSB.

A specific representation form of the measurement result may be the measurement value, or may be a non-quantized measurement result. This is not limited. If the representation form of the measurement result is the measurement value, the measurement value type may be any one of the following: received signal code power RSCP, reference signal received power RSRP, reference signal received quality RSRQ, a signal-to-noise ratio SNR, a signal to interference plus noise ratio SINR, and a reference signal strength indication RSSI. For example, a difference between an RSRP value of the CSI-RS and an RSRP value of the SSB satisfies an RSRP difference threshold. It may be understood that a measurement value type used by the terminal device may be configured by the first network device, or may be predefined in a protocol. This is not limited. For example, the first network device indicates, by using measurement value type indication information, a measurement value type used by the terminal device. Optionally, the measurement value type indication information may be carried in the configuration information.

For example, that a difference between the measurement value of the CSI-RS and the measurement value of the SSB satisfies a difference threshold may be that a difference obtained by subtracting the measurement value of the SSB from the measurement value of the CSI-RS satisfies the difference threshold; or may be that a difference obtained by subtracting the measurement value of the CSI-RS from the measurement value of the SSB satisfies the difference threshold.

It should be understood that the difference threshold may be predefined in the protocol, or may be configured by the first network device. This is not specifically limited.

Optionally, the configuration information may include the difference threshold. In other words, after receiving the configuration information, the terminal device may obtain the difference threshold from the configuration information. Optionally, in this embodiment of this application, the configuration information may further include at least one measurement parameter of hysteresis, a trigger time, and a measurement event identifier.

Alternatively, optionally, the method 300 further includes: The first network device sends system information to the terminal device, where the system information includes the difference threshold. That is, the difference threshold may alternatively be carried in the system information, so that signaling overheads of the configuration information can be reduced. Optionally, the system information may further include at least one measurement parameter of hysteresis, a trigger time, and a measurement event identifier.

For ease of understanding, the "hysteresis" and the "trigger time" are uniformly explained herein, and details are not described in the following again. The parameter "hysteresis" is generally quality amplitude hysteresis, and is used to reduce frequent clearing and triggering of cell handover evaluation due to radio signal fluctuation, thereby reducing misjudgment and ping-pong handovers. The "trigger time" means that a measurement report of a measurement event is not reported immediately when the measurement event satisfies a trigger condition, but is reported only when the event continuously satisfies a trigger threshold during the trigger time. The parameter "trigger time" may decrease a quantity of occasionally triggered event reports, an average quantity of handovers, and a quantity of incorrect handovers, thus preventing undesired handovers. It should be understood that meanings of the "hysteresis" and the "trigger time" are simply described herein. For specific meanings, refer to existing explanations.

Optionally, in another implementation, that a measurement result of the CSI-RS and a measurement result of the SSB measured by the terminal device satisfy a preset condition includes: A measurement value of the SSB satisfies a first quality threshold, and a measurement value of the CSI-RS satisfies a second quality threshold. For example, the measurement value of the SSB is greater than the first quality threshold, and the measurement value of the CSI-RS is less than the second quality threshold.

It should be understood that the first quality threshold and the second quality threshold may be predefined in the protocol, or may be configured by the first network device. This is not specifically limited.

Optionally, the configuration information may include the first quality threshold and the second quality threshold. In other words, after receiving the configuration information, the terminal device may further obtain the first quality threshold and the second quality threshold. Optionally, in this embodiment of this application, the configuration information may further include at least one measurement parameter of hysteresis, a trigger time, and a measurement event identifier.

Alternatively, optionally, the method 300 further includes: The first network device sends system information to the terminal device, where the system information includes the first quality threshold and the second quality threshold. That is, the first quality threshold and the second quality threshold may alternatively be carried in the system information, so that signaling overheads of the configuration information can be reduced. Optionally, the system information may further include at least one measurement parameter of hysteresis, a trigger time, and a measurement event identifier.

Alternatively, optionally, the configuration information may include the first quality threshold and a first offset, but does not include the second quality threshold. The terminal device may determine the second quality threshold based on the first quality threshold and the first offset. For example, the second quality threshold may be obtained by adding the first offset to the first quality threshold or subtracting the first offset from the first quality threshold.

Similarly, the first quality threshold and the first offset may alternatively be carried in the system information, so that signaling overheads of the configuration information can be reduced.

Alternatively, optionally, the configuration information may include the second quality threshold and a second offset, but does not include the first quality threshold. The terminal device may determine the first quality threshold based on the second quality threshold and the second offset. For example, the first quality threshold may be obtained by adding the second offset to the second quality threshold or subtracting the second offset from the second quality threshold.

Similarly, the second quality threshold and the second offset may alternatively be carried in the system information, so that signaling overheads of the configuration information can be reduced.

Alternatively, optionally, the configuration information in this embodiment of this application may be carried in the system information. It should be understood that, for related descriptions of the configuration information, refer to the foregoing descriptions. For brevity, details are not described herein again.

S340: The terminal device sends a first report to the first network device, where the first report includes identification information of the first cell. Correspondingly, the first network device receives the first report from the terminal device. The first report may be a measurement report.

Optionally, the first report further includes the measurement result of the CSI-RS and/or the measurement result of the SSB of the first cell.

Optionally, the first report further includes location information of the terminal device. The location information may be used to indicate a location at which the terminal device determines the first report.

In this embodiment of this application, the terminal device simultaneously measures the CSI-RS and the SSB of the cell, and determines the first report when the measurement result of the CSI-RS and the measurement result of the SSB satisfy the preset condition. The terminal device may send the first report to the first network device, to assist the first network device in identifying the fake base station. Compared with a conventional technology in which the SSB is first measured and then the CSI-RS is measured, this embodiment of this application provides the communication method in which the first network device can identify the fake base station earlier. In another aspect, in the method in this embodiment of this application, a handover failure that occurs when the terminal device is handed over to the fake base station is avoided. This helps improve service experience of the terminal device.

It may be understood that the terminal device sends the first report to the first network device. In an implementation, the terminal device sends the first report to the first network device through a cell served by the first network device.

Alternatively, in another implementation, the terminal device sends the first report to another network device through a cell served by the another network device, and the another network device sends a second report to the first network device, where the second report may be the first report, or may be a variation of the first report. It may be understood that, in this implementation, the first report needs to carry identification information of a second cell (where a network device to which the second cell belongs is the first network device). The identification information of the second cell is used by the another network device to determine the first network device to which the second cell belongs.

Optionally, that the terminal device sends a first report to the first network device may further include: The terminal device may send first report indication information to the first network device, where the first report indication information is used to indicate that the first report exists in the terminal device. The first network device sends first report reporting indication information to the terminal device, where the first report reporting indication information is used to indicate the terminal device to report the first report. The terminal device sends the first report to the first network device based on the first report reporting indication information.

For the first network device, the first network device determines, based on the first report, that the fake base station exists, and the fake base station replicates an SSB signal and cell identification information of a real cell. Herein, the terminal device determines the first report only when the measurement result of the CSI-RS and the measurement result of the SSB of the first cell (the fake cell) measured by the terminal device satisfy the preset condition, and reports the first report to the first network device. If the first report includes the identification information of the first cell, the first network device considers, based on the identification information of the first cell, that the SSB signal and the cell identification information of the real cell are replicated by the fake base station. If the first report includes the identification information of the first cell and the measurement result of the CSI-RS and the measurement result of the SSB of the first cell, the first network device may perform further determining with reference to the measurement result of the CSI-RS and the measurement result of the SSB of the first cell. For example, if the first network device determines that the measurement result of the CSI-RS and the measurement result of the SSB of the first cell satisfy the preset condition, the first network device determines that the real cell is replicated by the fake base station. If the first report further includes the location information, the first network device may further determine location range information of the fake base station that replicates the real cell.

Optionally, the method 300 further includes: The first network device receives CSI-RS configuration information from a third network device. For example, the first network device is a source base station, the third network device is a target base station, and the source base station may exchange a CSI-RS configuration with the target base station.

It may be understood that the first network device (or the second network device or the third network device) in this embodiment of this application may be any network device described above, for example, may be a DU, a CU, or a CU-CP. This is not specifically limited.

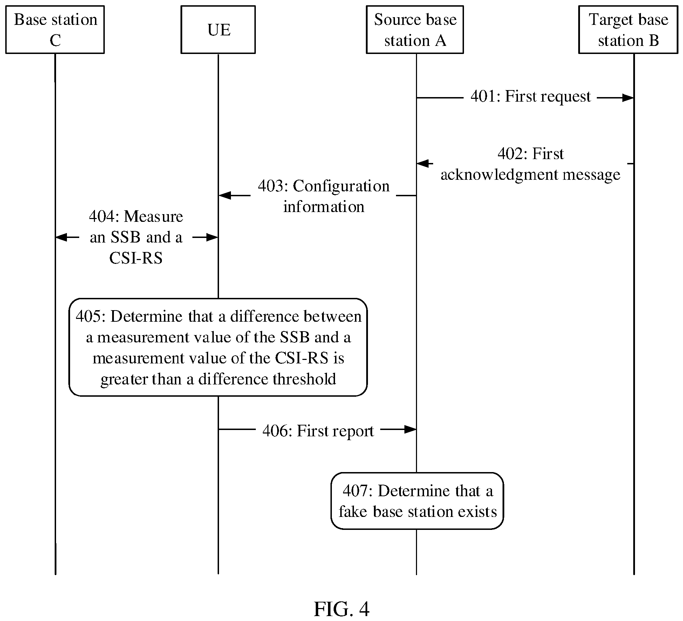

For ease of understanding by a person skilled in the art, the following provides descriptions with reference to an example in FIG. 4.

FIG. 4 is described by using an example in which a terminal device is UE, a first network device is a source base station A, a second network device is a fake base station C, and a third network device is a target base station B. It may be understood that in this embodiment of this application, an example in which a network device is a base station is used for description, but the network device is not limited to the base station. For a specific form of the network device, refer to the foregoing descriptions. For example, the network device may be a DU, a CU, or a CU-CP.

As shown in FIG. 4, the following steps are included.

401: The source base station A sends a first request to the target base station B. The first request is used to request CSI-RS configuration information of a first cell served by the target base station. For example, the first request is a handover request (handover request) or a measurement configuration request message.

402: The target base station B sends a first acknowledgment message to the source base station A. The first acknowledgment message includes the CSI-RS configuration information of the first cell served by the target base station B. For example, if the first request is the handover request, the first acknowledgment message is a handover request ACK. For another example, if the first request is the measurement configuration request message, the first acknowledgment message is a measurement configuration request acknowledgment message.

403: The source base station A sends configuration information to the UE. The configuration information is used to indicate the UE to measure a CSI-RS and an SSB of the first cell. For example, the configuration information is carried in an RRC reconfiguration message or an RRC connection reconfiguration message.

Optionally, the configuration information includes a difference threshold. In this embodiment of this application, an example in which the configuration information includes the difference threshold is used for description. For another implementation of the configuration information, refer to descriptions about the configuration information in steps S320 and S330. For brevity, details are not described herein again.

404: The UE measures the SSB and the CSI-RS of the first cell (which is served by the base station C).

405: The UE determines that a difference between a measurement value of the SSB and a measurement value of the CSI-RS is greater than the difference threshold.

Because the base station C is a fake base station, the base station C replicates SSB configuration information of a real cell served by the target base station B, and sends a replicated SSB signal based on the SSB configuration information, the UE may measure the SSB signal in the first cell and determine the measurement value of the SSB. However, the fake base station C cannot or is difficult to replicate the CSI-RS configuration information of the real cell served by the target base station B, and the fake base station C cannot send a CSI-RS signal or cannot send a CSI-RS signal that is completely consistent with the CSI-RS configuration information. Therefore, the UE cannot measure the CSI-RS signal in the first cell, and further cannot determine the measurement value of the CSI-RS; or the UE can measure only a part of the CSI-RS signal in the first cell, and further determines that the measurement value of the CSI-RS is low. When the UE determines that the difference between the measurement value of the SSB and the measurement value of the CSI-RS of the first cell is greater than the difference threshold, the UE determines a first report.

406: The UE sends the first report to the source base station A. Optionally, the first report may be a measurement report (measure report). The measurement report includes identification information of the first cell. Optionally, the measurement report further includes the measurement value of the SSB and the measurement value of the CSR-RS of the first cell.

407: The source base station A determines, based on the first report, that the fake base station exists. For example, the base station C in this embodiment is the fake base station. The base station C replicates information about the real cell served by the target base station B.

It should be noted that, in the foregoing procedure, steps 401 and 402 may be optional. In other words, the source base station A may not exchange the CSI-RS configuration with the target base station B, and the CSI-RS configuration may be predefined in a protocol.

It should be understood that, the example in FIG. 4 is merely for ease of understanding the embodiments of this application by a person skilled in the art, but is not intended to limit the embodiments of this application to a specific scenario in the example. A person skilled in the art can definitely make various equivalent modifications or changes based on the example in FIG. 4, and such modifications or changes also fall within the scope of the embodiments of this application.

Currently, a mobility robustness optimization MRO mechanism is introduced in the 3GPP. The terminal device records parameters (for example, parameters that are of cells and that are experienced in a mobility failure process and time information) in the mobility failure process, and reports the parameters to the network device, so that the network device can determine a cell in which a failure occurs, to better optimize a mobility parameter. If a handover failure is caused by the existence of the fake base station, the terminal device also records an RLF report. However, the handover failure caused by the fake base station is not caused by an improper mobility parameter setting of a network. In this case, the network device cannot identify whether the RLF report is triggered by the handover failure caused by the fake base station, and adjusts the mobility parameter based on the RLF report. As a result, more network handover failures are caused. In view of this, this application provides another embodiment, to assist the network device in identifying whether the RLF report is caused by the fake base station.

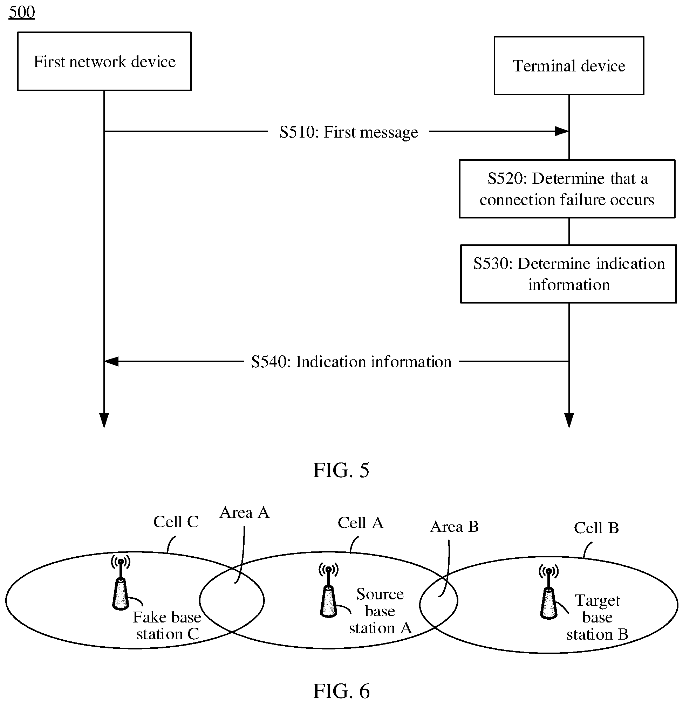

FIG. 5 is a schematic interaction diagram of a communication method 500 according to another embodiment of this application. It may be understood that the embodiment in FIG. 5 and another embodiment (for example, the method in FIG. 3 or FIG. 4) of this application may be implemented in a combination manner, or may be separately implemented. This is not specifically limited.

As shown in FIG. 5, the method 500 includes the following steps.

S510: A first network device sends a first message to a terminal device, where the first message is used to indicate the terminal device to be handed over to a target cell. Correspondingly, the terminal device receives the first message from the first network device.

S520: The terminal device determines that a connection failure occurs.

The connection failure is classified into two types: a handover failure HOF and a radio link failure RLF. The HOF is a connection failure that occurs when the terminal device fails to be handed over to the target cell, or a connection failure that occurs in a process in which the terminal device is handed over to the target cell. The RLF is a connection failure that occurs after the terminal device is successfully handed over to the target cell.

In an HOF scenario, the terminal device cannot complete a handover to a network device to which the target cell belongs, and cannot determine whether the network device to which the target cell belongs can perform security deprotection on security-protected information sent by the terminal device. Therefore, the terminal device cannot determine whether the HOF is caused by a handover to a fake base station. Therefore, for an RLF report whose failure type is the HOF, it needs to be further determined whether the RLF report is recorded because the connection failure occurs during a handover to a real target cell.

In an RLF scenario, the terminal device completes a handover to the target cell, that is, the network device to which the target cell belongs can perform security deprotection on the security-protected information sent by the terminal device. Therefore, it can be proved that the network device to which the target cell belongs is a real base station. Therefore, an RLF report whose failure type is the RLF is recorded because the connection failure occurs during the handover to the real target cell.

Herein, the terminal device may fail to be handed over to the network device to which the target cell belongs because the terminal device is handed over to the fake base station, or because the connection failure occurs during the handover to the target cell.

S530: The terminal device determines indication information, where the indication information is used by the first network device to determine a type of a measurement result of a cell (where the cell may be the target cell or another cell) measured by the terminal device, where the type of the measurement result includes a channel state information-reference signal CSI-RS-based measurement result type or a synchronization signal block SSB-based measurement result type.

It may be understood that, in an implementation, when the failure type is the HOF, the terminal device performs step S530.

Optionally, the indication information is used by the first network device to determine the type that is of the measurement result of the cell and that is carried in a measurement report sent by the terminal device to the first network device. Alternatively, the indication information is used by the first network device to determine the type that is of the measurement result of the cell and that triggers the terminal device to send a measurement report.

For example, if the first network device indicates the terminal device to measure an SSB, when the measurement result of the cell measured by the terminal device satisfies a preset condition (for example, a measurement value of the SSB satisfies a particular threshold), the terminal device is triggered to send the measurement report to the first network device. Correspondingly, when sending the measurement report (where the indication information is added to the measurement report), the terminal device may indicate, to the first network device by using the indication information, that the type that is of the measurement result and that triggers the measurement report is the SSB. For another example, if the first network device indicates the terminal device to measure a CSI-RS, when the measurement result of the cell measured by the terminal device satisfies a preset condition (for example, a measurement value of the CSI-RS satisfies a particular threshold), the terminal device is triggered to send the measurement report to the first network device. Correspondingly, when sending the measurement report (where the indication information is added to the measurement report), the terminal device may indicate, to the first network device by using the indication information, that the type that is of the measurement result and that triggers the measurement report is the SSB.

For example, the indication information may be represented by using one bit, and different values represent different types of measurement results. For example, when the value is 0, it indicates that the type of the measurement result is the SSB-based measurement result type. When the value is 1, it indicates that the type of the measurement result is the CSI-RS-based measurement result type. Alternatively, when the value is 1, it indicates that the type of the measurement result is the SSB-based measurement result type. When the value is 0, it indicates that the type of the measurement result is the CSI-RS-based measurement result type.

For example, the indication information is represented by using one bit, and the one bit directly indicates the type of the measurement result, for example, the CSI-RS-based measurement result type, or the SSB-based measurement result type.

Optionally, whether the indication information exists may also be used to represent different types of the measurement results. For example, if the indication information exists, it indicates that the type of the measurement result is the SSB-based measurement result type. If the indication information does not exist, it indicates that the type of the measurement result is the CSI-RS-based measurement result type. For another example, if the indication information does not exist, it indicates that the type of the measurement result is the SSB-based measurement result type. If the indication information exists, it indicates that the type of the measurement result is the CSI-RS-based measurement result type.

S540: The terminal device sends the indication information to the first network device. Correspondingly, the first network device receives the indication information.

It may be understood that the terminal device sends the indication information to the first network device. In an implementation, the terminal device sends the indication information to the first network device through a cell served by the first network device. Alternatively, in another implementation, the terminal device sends the indication information to another network device through a cell served by the another network device, and the another network device sends the indication information to the first network device.

Optionally, the indication information may be carried in an MRO report, may be carried in the radio link failure RLF report, or may be carried in a message exchanged between another terminal device and the network device. This is not limited.

For example, when recording the RLF report, the terminal device may include the indication information in the RLF report, so that the first network device identifies the RLF report based on the indication information. Herein, the RLF report is a report recorded by the terminal device in an MRO mechanism. It should be understood that if the term "RLF report" used in the MRO mechanism is changed, for example, is changed to the "MRO report", the technical solution in this embodiment of this application are still applicable. This is not specifically limited.

In this embodiment of this application, when determining that the connection failure occurs, the terminal device determines the indication information, where the indication information is used by the first network device to determine the type of the measurement result of the cell measured by the terminal device, and sends the indication information to the first network device, to assist the first network device in determining, based on the indication information, whether the RLF report is an RLF report recorded by the terminal device after the handover failure caused by the fake base station occurs.

Optionally, the method 500 further includes: The first network device identifies the RLF report based on the indication information.

The terminal device indicates the type of the measurement result by using the indication information, for example, the CSI-RS-based measurement result type or the SSB-based measurement result type. The first network device may determine, based on the type of the measurement result indicated by using the indication information, whether the RLF report is an RLF report recorded by the terminal device after the connection failure caused by the fake base station occurs in a handover process. In other words, after obtaining the indication information, the first network device may determine, based on the indication information, whether the RLF report needs to be ignored. If the first network device determines that the RLF report reported by the terminal device is the RLF report recorded by the terminal device after the connection failure caused by the fake base station occurs, the first network device may ignore the RLF report, and does not need to optimize a mobility parameter based on the RLF report. If the RLF report reported by the terminal device is an RLF report recorded by the terminal device after the connection failure occurs during the handover to the real target cell, the first network device needs to optimize the mobility parameter based on the RLF report, to ensure that the terminal device can be successfully handed over to the target cell. For example, if the first network device determines, based on the indication information, that the type of the measurement result is the CSI-RS-based measurement result type, the first network device may determine that the RLF report is the report recorded by the terminal device after the connection failure occurs during the handover of the terminal device to the real target cell. If the first network device determines, based on the indication information, that the type of the measurement result is the SSB-based measurement result type, the first network device cannot determine whether the RLF report is the report recorded by the terminal device after the connection failure caused by the fake base station occurs. Optionally, in an implementation, the first network device may ignore the RLF report.

Optionally, in an implementation, that the first network device identifies the RLF report based on the indication information includes: The first network device further identifies the RLF report based on location information when the handover of the terminal device fails and/or a failure type in the RLF report, where the failure type includes a handover failure HOF and/or a radio link failure RLF. For example, if the first network device determines, based on the indication information, that the type of the measurement result is the CSI-RS-based measurement result type, and/or the failure type of the connection failure of the terminal device is the RLF, the RLF report is the RLF report recorded by the terminal device after the connection failure occurs during the handover to the real target cell, and the RLF report recorded after the connection failure occurs during the handover to the real target cell may be recorded as a "first-type RLF report". The first-type RLF report is valid, that is, the first network device needs to optimize the mobility parameter based on the first-type RLF report. If the first network device determines, based on the indication information, that the type of the measurement result is the SSB-based measurement result type, and the failure type of the connection failure of the terminal device is the HOF, because it cannot be determined whether the RLF report is the RLF report recorded by the terminal device after the connection failure occurs during the handover to the real target cell, the RLF report may be recorded as a "second-type RLF report". The first network device may consider that the second-type RLF report is invalid or ignore the second-type RLF report, that is, does not optimize the mobility parameter based on the second-type RLF report.

For the second-type RLF report, for example, if the RLF report includes the indication information, the failure type, and the location information, the first network device may further identify validity of the second-type RLF report with reference to the location information. Optionally, the first network device may determine location range information based on the location information in the RLF report. For example, the first network device may determine a first location range based on the location information in the RLF report. If the first-type RLF report exists in RLF reports within the first location range or a successful handover scenario exists within the first location range, the first network device may determine that the second-type RLF report in which the location information in the RLF report is within the first location range is valid. If the first network device determines, based on the location information in the RLF report, that no first-type RLF report or only second-type RLF report exists in RLF reports within a second location range, the first network device may determine, based on the location information in the RLF report, that the second-type RLF report in which the location information is within the second location range is invalid. Further, if the first network device determines, based on the location information in the RLF report, that no first-type RLF report or only second-type RLF report exists in the RLF reports within the second location range, and the scenario in which the handover of the terminal device is successfully does not exist within the second location range, the first network device may determine, based on the location information in the RLF report, that the second-type RLF report in which the location information is within the second location range is invalid.

Herein, a scenario in FIG. 6 is used for description. As shown in FIG. 6, a fake base station C replicates a cell B (which may be referred to as a real cell) served by a (target) base station B, and a replicated fake cell B (where the replicated fake cell B is a cell C in FIG. 6) and the real cell B are neighboring cells of a cell A. For example, an overlapping area between the cell A and the cell C served by the fake base station C is denoted as an area A, and an overlapping area between the cell A and the cell B is denoted as an area B. If UE is located in the area A, there may be a scenario in which the UE is handed over to the fake base station C, the fake base station C cannot identify a response message of the UE, and therefore the UE cannot complete a handover to the fake base station C.

If the UE fails to be handed over in the area A, the UE records an RLF report. If the UE fails to be handed over in the area B, the UE records an RLF report. A source base station A may identify the two types of RLF reports based on information in the RLF reports. If indication information carried in the RLF report indicates that a type of a measurement result is a CSI-RS and/or a failure type is an RLF, the source base station A considers that the RLF report is a valid report or a real report. If indication information carried in the RLF report indicates that a type of a measurement result is an SSB, the source base station A performs further identification based on a failure type reported by the UE. If the failure type of the RLF report reported by the UE is an HOF, the source base station A cannot identify whether the RLF report is a report recorded by the terminal device after a connection failure occurs during the handover to the fake base station. Optionally, the source base station A may ignore an RLF report whose type of the measurement result is the SSB and failure type is the HOF. Alternatively, the source base station A may perform further determining based on location information.

For example, the RLF report includes the location information. If the source base station A determines the area A based on the location information, and determines that the type of the measurement result in the RLF report in which the location information is in the area A is the SSB and the failure type is the HOF, the source base station A considers that a handover failure occurs because the UE in the area A is handed over to the fake base station C, and therefore ignores the RLF report in which the location information is in the area A, that is, ignores the RLF report corresponding to the area A. Further, if the source base station A determines that no valid RLF report exists and/or a scenario in which a handover to the base station B is successful does not exist (that is, a handover to the fake base station C actually occurs) in the area A, the type of the measurement result in the RLF report in the area A is the SSB, and the failure type is the HOF, the source base station A considers that a handover failure occurs because the UE in the area A is handed over to the fake base station C, and therefore ignores the RLF report in which the location information in the RLF report is in the area A, that is, ignores the RLF report corresponding to the area A.

For example, the RLF report includes the location information. If the source base station A determines the area B based on the location information, and determines that the type of the measurement result in at least two of the RLF reports in which the location information is in the area B is the SSB and the failure type includes both the HOF and the RLF, the source base station A considers that a handover failure of the UE in the area B is caused by a connection failure, and therefore can optimize a mobility parameter based on the RLF report. Optionally, if the source base station A determines, based on the location information, that a valid RLF report exists and/or a successful handover scenario exists in the area B, the source base station A may consider that the RLF report in which the location information in the RLF report is in the area B is valid.

In this embodiment of this application, the terminal device may send the indication information to the first network device through a cell served by the first network device, or may forward the indication information to the first network device through another network device. It may be understood that the terminal device sends the indication information to the first network device. In an implementation, the terminal device sends the indication information to the first network device through the cell served by the first network device. Alternatively, in another implementation, the terminal device sends the indication information to the another network device through a cell served by the another network device, and the another network device sends the indication information to the first network device. The following describes the implementations in detail.

Optionally, that the terminal device sends the indication information to the first network device includes: The terminal device sends the indication information to the first network device through a second network device, where the second network device is a serving network device of the terminal device.

Herein, the second network device and the first network device may be the same or different. This is not limited. If the first network device is different from the second network device, the terminal device may first send the indication information to the second network device. For example, the second network device is a serving base station.

Optionally, that the terminal device sends the indication information to the first network device includes: The terminal device sends the indication information to the first network device through the second network device and a third network device, where the third network device is a network device in which a connection failure occurs and to which the target cell belongs. Herein, the terminal device sends the indication information to the second network device, the second network device sends the indication information to the third network device, and the third network device sends the indication information to the first network device.

Herein, the third network device is the network device in which the connection failure occurs. The terminal device may first send the RLF report to the second network device (for example, the serving base station), where the RLF report includes the indication information. Then, the second network device sends the indication information to the third network device (the network device in which the connection failure occurs and to which the target cell belongs). For example, if the second network device determines, based on the received RLF report, that a connection failure occurs in a cell served by the third network device, the second network device sends the RLF report to the third network device, where the RLF report includes the indication information. Finally, the third network device sends the indication information to the first network device. For example, if the third network device determines, based on the received RLF report, that the handover failure is caused by an improper handover parameter setting of the first network device, the third network device sends the indication information to the first network device. It should be noted herein that when exchanging the indication information between the network devices, the indication information may be carried in their respective interaction messages. Specific content of the interaction message is not limited in this embodiment of this application. It may be understood that each network device (the first network device, the second network device, or the third network device) in this embodiment of this application may be any network device described above, for example, may be a DU, a CU, or a CU-CP. This is not specifically limited.

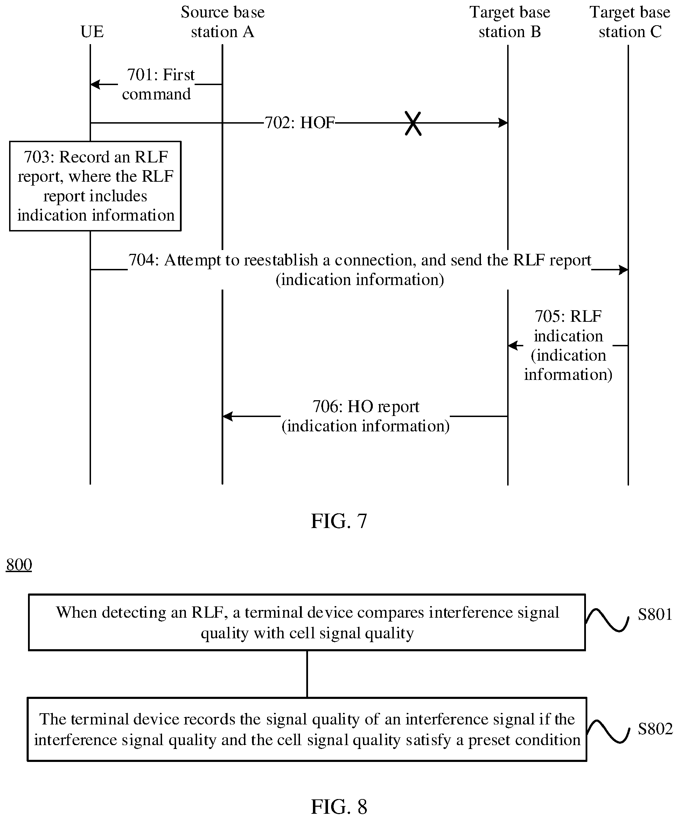

A handover scenario in FIG. 7 is used as an example to describe a process in which indication information is exchanged between network devices. FIG. 7 is described by using an example in which a terminal device is UE, a first network device is a source base station A, a second network device is a target base station C, and a third network device is a target base station B. As shown in FIG. 7, the following steps are included.

701: The source base station A sends a first command to the UE, where the first command is used to indicate the UE to be handed over to the target base station B. The first command may be an RRC reconfiguration message or an RRC connection reconfiguration message.

702: A handover failure HOF occurs in a process in which the UE is handed over to the target base station B.

703: The UE records an RLF report, where the RLF report includes the indication information.

For example, when the UE determines that a connection failure type is the HOF, the UE includes the indication information in the RLF report.

704: The UE attempts to reestablish a connection, and sends the RLF report to the target base station C, where the RLF report includes the indication information.

It may be understood that the target base station C may be a base station to which a cell to which the UE successfully reestablishes a connection belongs, or a base station to which another cell to which the UE establishes a connection belongs. It should be understood that the target base station C may be the source base station A, the target base station B, or another base station different from the source base station A and the target base station B. In FIG. 7, an example in which the target base station C is different from the source base station A and the target base station B is used for description.

It should be understood that, when the target base station C is the source base station A, that is, the source base station A is the base station to which the cell to which the UE successfully reestablishes the connection belongs, after receiving the RLF report including the indication information, the source base station A may send an RLF indication to the target base station, and then the target base station B sends an HO report to the source base station A. The HO report includes the RLF report, and the RLF report includes the indication information.

705: The target base station C sends the RLF indication to the target base station B. The RLF indication includes the RLF report, and the RLF report includes the indication information.

706: The target base station B sends the HO report to the source base station A. The HO report includes the RLF report, and the RLF report includes the indication information.

Alternatively, optionally, the target base station C may directly send the HO report to the source base station A. The HO report includes the RLF report, and the RLF report includes the indication information. For example, when the target base station C is the same as the target base station B, the target base station C may directly send the HO report to the source base station A.

It should be understood that, the example in FIG. 7 is merely for ease of understanding the embodiments of this application by a person skilled in the art, but is not intended to limit the embodiments of this application to a specific scenario in the example. A person skilled in the art can definitely make various equivalent modifications or changes based on the example in FIG. 7, and such modifications or changes also fall within the scope of the embodiments of this application.

This application further provides a fake base station detection method. FIG. 8 is a schematic flowchart of the fake base station detection method 800 according to still another embodiment of this application. It should be understood that the method shown in FIG. 8 may be used in combination with the foregoing embodiments, or may be used independently. This is not specifically limited. For example, the method 800 and the method 500 may be used in combination, and a terminal device records interference signal quality in an RLF report. Optionally, as shown in FIG. 8, in an implementation, the method 800 includes the following steps.

S801: When detecting an RLF, the terminal device compares the interference signal quality with cell signal quality.

S802: The terminal device records the signal quality of an interference signal if the interference signal quality and the cell signal quality satisfy a preset condition.

Specifically, when detecting the RLF, the terminal device may compare the interference signal quality with the cell signal quality. When the interference signal quality and the cell signal quality satisfy the preset condition, the terminal device may record the signal quality of the interference signal, and then send the signal quality of the interference signal to a network device. This manner helps the network device identify a fake base station that sends only the interference signal to interfere with a current cell of the terminal device. For example, the fake base station transmits a high-power interference signal to interfere with normal data of the terminal device, so that the RLF occurs in the terminal device.

Optionally, a measurement type of the interference signal quality is different from a measurement type of the cell signal quality. For example, the measurement type of the interference signal quality may be any one of the following: an RSSI, RSRQ, and an SINR. The measurement type of the cell signal quality may be RSRP. It should be understood that the examples herein are merely for ease of understanding by a person skilled in the art, and do not constitute a limitation on the embodiments of this application. The measurement type of the interference signal quality and the measurement type of the cell signal quality may alternatively be another measurement type as long as the measurement type of the interference signal quality is different from the measurement type of the cell signal quality.

Optionally, that the interference signal quality and the cell signal quality satisfy a preset condition includes: The interference signal quality is higher than a first threshold, or the interference signal quality and the cell signal quality are higher than a second threshold. Herein, the first threshold and/or the second threshold may be configured by the network device, or may be predefined. This is not limited.

Optionally, the terminal device may record the interference signal quality in the RLF report. The terminal device sends, to the network device, the RLF report recording the interference signal quality. After obtaining the RLF report, the network device may learn that excessively strong interference causes the RLF, may perform interference coordination management with a neighboring network device, and determine whether the fake base station exists. Optionally, the RLF report may further include a cell identifier that is used to indicate cell information corresponding to the interference signal quality. For explanations of the cell identifier, refer to the foregoing descriptions. For brevity, details are not described herein again.

It should be understood that the solutions in the embodiments of this application may be properly combined for use, and explanations or descriptions of terms in the embodiments may be cross-referenced or explained in the embodiments. This is not limited.

It should further be understood that sequence numbers of the foregoing processes do not mean execution sequences in various embodiments of this application. The execution sequences of the processes should be determined based on functions and internal logic of the processes. Numbers or sequence numbers in the foregoing processes are merely used for differentiation for ease of description, and should not constitute any limitation on an implementation process of the embodiments of this application.

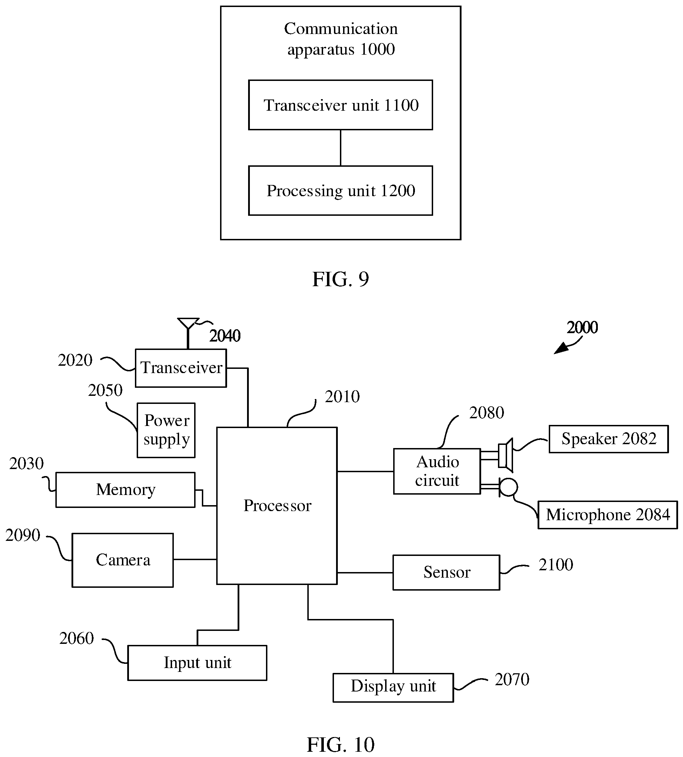

The foregoing describes in detail the communication methods according to the embodiments of this application with reference to FIG. 1 to FIG. 8. The following describes communication apparatuses according to the embodiments of this application with reference to FIG. 9 to FIG. 11. It should be understood that the technical features described in the method embodiments are also applicable to the following apparatus embodiments.

FIG. 9 is a schematic block diagram of a communication apparatus according to an embodiment of this application. As shown in FIG. 9, the apparatus 1000 may include a transceiver unit 1100 and a processing unit 1200.

In a possible design, the communication apparatus 1000 may correspond to the terminal device in the foregoing method embodiments, for example, may be the terminal device, or may be a chip disposed in the terminal device.

Specifically, the communication apparatus 1000 may correspond to the terminal device in the method 300 or the method 500 according to the embodiments of this application. The communication apparatus 1000 may include units configured to perform the method performed by the terminal device in the method 300 in FIG. 3, or units configured to perform the method performed by the terminal device in the method 500 in FIG. 5, or units configured to perform the method performed by the terminal device in the method 800 in FIG. 8. In addition, the units in the communication apparatus 1000 and the foregoing other operations or functions are separately used to implement corresponding procedures of the terminal device in the method 300 in FIG. 3, implement corresponding procedures of the terminal device in the method 500 in FIG. 5, or implement corresponding procedures of the terminal device in the method 800 in FIG. 8.

In an implementation, the transceiver unit 1100 and the processing unit 1200 may be configured to perform the following steps.

The transceiver unit 1100 is configured to receive configuration information from a first network device.

The processing unit 1200 is configured to: measure, based on the configuration information, a channel state information-reference signal CSI-RS and a synchronization signal block SSB that are sent by a first cell; and determine that a measurement result of the CSI-RS and a measurement result of the SSB of the first cell satisfy a preset condition.

The transceiver unit 1100 is further configured to send a first report to the first network device, where the first report includes identification information of the first cell.

Optionally, the first report further includes the measurement result of the CSI-RS and/or the measurement result of the SSB of the cell.

Optionally, that a measurement result of the CSI-RS and a measurement result of the SSB satisfy a preset condition includes: A difference between a measurement value of the CSI-RS and a measurement value of the SSB satisfies a difference threshold.

Optionally, the configuration information includes the difference threshold.

Optionally, the transceiver unit 1100 is further configured to receive system information from the first network device, where the system information includes the difference threshold.

Optionally, that a measurement result of the CSI-RS and a measurement result of the SSB satisfy a preset condition includes:
A measurement value of the SSB satisfies a first quality threshold; and a measurement value of the CSI-RS satisfies a second quality threshold.

Optionally, the configuration information includes the first quality threshold and the second quality threshold.

Optionally, the transceiver unit 1100 is further configured to receive system information from the first network device, where the system information includes the first quality threshold and the second quality threshold.

Optionally, the measurement value is any one of the following:
received signal code power RSCP, reference signal received power RSRP, reference signal received quality RSRQ, a signal-to-noise ratio SNR, a signal to interference plus noise ratio SINR, and a reference signal strength indication RSSI.

Alternatively, in another implementation, the transceiver unit 1100 and the processing unit 1200 may be configured to perform the following steps.

The transceiver unit 1100 is configured to receive a first message from the first network device, where the first message is used to indicate the terminal device to be handed over to a target cell.

The processing unit 1200 is configured to determine that a connection failure occurs, and is further configured to determine indication information, where the indication information is used by the first network device to determine a type of the measurement result of the cell measured by the terminal device, and the type of the measurement result includes a channel state information-reference signal CSI-RS-based measurement result type or a synchronization signal block SSB-based measurement result type.

The transceiver unit 1100 is further configured to send the indication information to the first network device.

Optionally, that the transceiver unit 1100 is configured to send the indication information to the first network device includes:
The transceiver unit 1100 sends the indication information to the first network device through a second network device, where the second network device is a serving network device of the terminal device.

Optionally, that the transceiver unit 1100 is configured to send the indication information to the first network device through a second network device includes:
The transceiver unit 1100 sends the indication information to the first network device through the second network device and a third network device, where the third network device is a network device in which the connection failure occurs and to which the target cell belongs.

Optionally, the indication information is carried in a mobility robustness optimization RLF report or a radio link failure RLF report.

Optionally, the RLF report further includes location information when the terminal device fails to be handed over to the cell and/or a failure type, where the failure type includes a handover failure HOF and/or a radio link failure RLF.

It should be understood that, a specific process in which each unit performs the foregoing corresponding step has been described in detail in the foregoing method embodiments. For brevity, details are not described herein again.

It should be further understood that, when the communication apparatus 1000 is the terminal device, the transceiver unit 1100 in the communication apparatus 1000 may correspond to a transceiver 2020 in a terminal device 2000 shown in FIG. 10, and the processing unit 1200 in the communication apparatus 1000 may correspond to a processor 2010 in the terminal device 2000 shown in FIG. 10.

It should be further understood that, when the communication apparatus 1000 is the chip disposed in the terminal device, the transceiver unit 1200 in the communication apparatus 1000 may be an input/output interface.

In another possible design, the communication apparatus 1000 may correspond to the network device in the foregoing method embodiments, for example, may be the network device, or a chip disposed in the network device.

Specifically, the communication apparatus 1000 may correspond to the first network device in the method 300 according to the embodiments of this application. The communication apparatus 1000 may include units configured to perform the method performed by the first network device in the method 300 in FIG. 3, or units configured to perform the method performed by the first network device in the method 500 in FIG. 5. In addition, the units in the communication apparatus 1000 and the foregoing other operations or functions are separately used to implement corresponding procedures of the first network device in the method 300 in FIG. 3, or implement corresponding procedures of the first network device in the method 500 in FIG. 5.

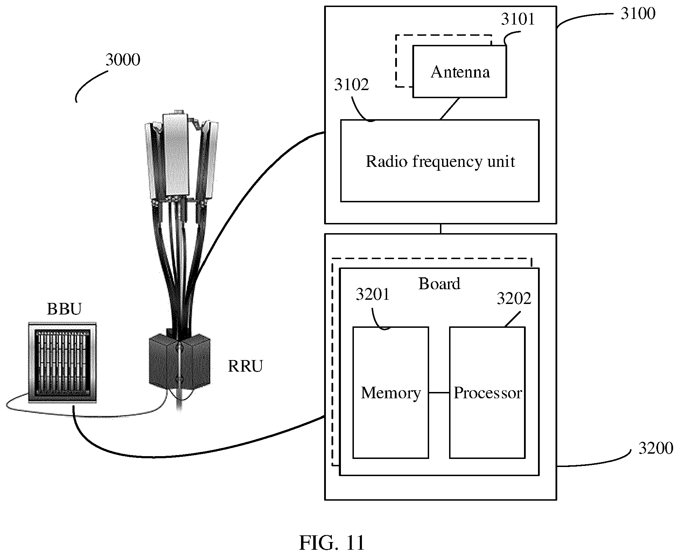

It should be further understood that, when the communication apparatus 1000 is the network device, the transceiver unit 1100 in the communication apparatus 1000 may correspond to a transceiver 3200 in a network device 3000 shown in FIG. 11, and the processing unit 1200 in the communication apparatus 1000 may correspond to a processor 3100 in the network device 3000 shown in FIG. 11.

It should be further understood that, when the communication apparatus 1000 is the chip disposed in the network device, the transceiver unit 1100 in the communication apparatus 1000 may be an input/output interface.

In an implementation, the transceiver unit 1100 is configured to send configuration information to a terminal device, where the configuration information is used to configure the terminal device to measure a channel state information-reference signal CSI-RS and a synchronization signal block SSB that are sent by a first cell. The transceiver unit 1100 is further configured to receive a first report from the terminal device, where the first report includes identification information of the first cell, and a measurement result of the CSI-RS and a measurement result of the SSB of the first cell satisfy a preset condition.

Optionally, the first report further includes the measurement result of the CSI-RS and the measurement result of the SSB of the first cell.

Optionally, the apparatus further includes a processing unit 1200, configured to determine, based on the first report, that a second network device corresponding to the first cell is a fake base station.

Optionally, that a measurement result of the CSI-RS and a measurement result of the SSB satisfy a preset condition includes: A difference between a measurement value of the CSI-RS and a measurement value of the SSB satisfies a difference threshold.

Optionally, the configuration information includes the difference threshold.

Optionally, the transceiver unit 1100 is further configured to send system information, where the system information includes the difference threshold.

Optionally, that a measurement result of the CSI-RS and a measurement result of the SSB satisfy a preset condition includes:

A measurement value of the SSB satisfies a first quality threshold; and a measurement value of the CSI-RS satisfies a second quality threshold.

Optionally, the configuration information includes the first quality threshold and the second quality threshold.

Optionally, the transceiver unit 1100 is further configured to send system information, where the system information includes the first quality threshold and the second quality threshold.

Optionally, the measurement value is any one of the following:
received signal code power RSCP, reference signal received power RSRP, reference signal received quality RSRQ, a signal-to-noise ratio SNR, a signal to interference plus noise ratio SINR, and a reference signal strength indication RSSI.

Optionally, the transceiver unit 1100 is further configured to receive CSI-RS configuration information from a third network device.

Alternatively, in another implementation, the transceiver unit 1100 is configured to send a first message to a terminal device, where the first message is used to indicate the terminal device to be handed over to a target cell. The transceiver unit 1100 is further configured to receive indication information, where the indication information is used to determine a type of a measurement result of the cell measured by the terminal device, and the type of the measurement result includes a CSI-RS-based measurement result type or an SSB-based measurement result type.

Optionally, the apparatus 1000 further includes:
a processing unit 1200, configured to identify an RLF report based on the indication information.

Optionally, the measurement result of the cell is an SSB-based measurement result.

That the processing unit 1200 is configured to identify the RLF report based on the indication information includes:
The processing unit 1200 identifies the RLF report based on location information when the terminal device fails to be handed over to the cell and/or a failure type, where the failure type includes a handover failure HOF and/or a radio link failure RLF.

Optionally, the measurement result of the cell is a CSI-RS-based measurement result.

That the first network device identifies the RLF report based on the indication information includes:
The first network device determines that the RLF report is a report generated when the terminal device fails to be handed over to the target cell.

Optionally, that the transceiver unit 1100 is configured to receive indication information includes:
The transceiver unit 1100 receives the indication information from the terminal device.

Optionally, that the transceiver unit 1100 is configured to receive indication information includes:
The transceiver unit 1100 receives the indication information from a second network device, where the second network device is a serving network device of the terminal device, and the indication information is sent by the terminal device to the second network device; or
the transceiver unit 1100 receives the indication information from a third network device, where the indication information is sent by a second network device to the third network device, the second network device is a serving network device of the terminal device, and the third network device is a network device in which a connection failure occurs and to which the target cell belongs.

Optionally, the indication information is carried in the RLF report.

Optionally, the RLF report further includes the location information when the terminal device fails to be handed over to the cell and/or the failure type, where the failure type includes a handover failure HOF and/or a radio link failure RLF.

It should be understood that, a specific process in which each unit performs the foregoing corresponding step has been described in detail in the foregoing method embodiments. For brevity, details are not described herein again.

It should be further understood that, when the communication apparatus 1000 is the network device, the transceiver unit 1100 in the communication apparatus 1000 may correspond to the transceiver unit 3100 in the network device 3000 shown in FIG. 11, and the processing unit 1200 in the communication apparatus 1000 may correspond to the processor 3202 in the network device 3000 shown in FIG. 11.

It should be further understood that, when the communication apparatus 1000 is the chip disposed in the terminal device, the transceiver unit 1200 in the communication apparatus 1000 may be an input/output interface.

FIG. 10 is a schematic diagram of a structure of a terminal device 2000 according to an embodiment of this application. The terminal device 2000 may be used in the system shown in FIG. 1, to perform functions of the terminal device in the foregoing method embodiments. As shown in FIG. 10, the terminal device 2000 includes a processor 2010 and a transceiver 2020. Optionally, the terminal device 2000 further includes a memory 2030. The processor 2010, the transceiver 2002, and the memory 2030 may communicate with each other through an internal connection path, to transfer a control signal and/or a data signal. The memory 2030 is configured to store a computer program. The processor 2010 is configured to invoke the computer program from the memory 2030 and run the computer program, to control the transceiver 2020 to receive or send a signal. Optionally, the terminal device 2000 may further include an antenna 2040, configured to send, by using a radio signal, uplink data or uplink control signaling output by the transceiver 2020.

The processor 2010 and the memory 2030 may be integrated into one processing apparatus. The processor 2010 is configured to execute program code stored in the memory 2030 to implement the foregoing functions. During specific implementation, the memory 2030 may alternatively be integrated into the processor 2010, or may be independent of the processor 2010. The processor 2010 may correspond to the processing unit in FIG. 9.

The transceiver 2020 may correspond to the communication unit in FIG. 9, and may also be referred to as a transceiver unit. The transceiver 2020 may include a receiver (or referred to as a receiver or a receiver circuit) and a transmitter (or referred to as a transmitter or a transmitter circuit). The receiver is configured to receive a signal, and the transmitter is configured to transmit a signal.

It should be understood that the terminal device 2000 shown in FIG. 10 can implement the processes of the terminal device in the method embodiment shown in FIG. 3, FIG. 5, or FIG. 8. Operations and/or functions of modules in the terminal device 2000 are separately intended to implement corresponding procedures in the foregoing method embodiments. For details, refer to the descriptions in the foregoing method embodiments. To avoid repetition, detailed descriptions are properly omitted herein.

The processor 2010 may be configured to perform an action that is implemented inside the terminal device and that is described in the foregoing method embodiments, and the transceiver 2020 may be configured to perform an action of receiving or sending that is performed by the terminal device from or to the network device and that is described in the foregoing method embodiments. For details, refer to the descriptions in the foregoing method embodiments. Details are not described herein again.

Optionally, the terminal device 2000 may further include a power supply 2050, configured to supply power to various devices or circuits in the terminal device.

In addition, to improve the functions of the terminal device, the terminal device 2000 may further include one or more of an input unit 2060, a display unit 2070, an audio circuit 2080, a camera 2090, a sensor 2100, and the like, and the audio circuit may further include a speaker 2082, a microphone 2084, and the like.

FIG. 11 is a schematic diagram of a structure of a network device according to an embodiment of this application, for example, may be a schematic diagram of a structure of a base station. The base station 3000 may be used in the system shown in FIG. 1, to perform functions of the network device in the foregoing method embodiments. As shown in the figure, the base station 3000 may include one or more radio frequency units, for example, one or more remote radio units (remote radio units, RRUs) 3100, and one or more baseband units (BBUs) (which may also be referred to as distributed units (DUs)) 3200. The RRU 3100 may be referred to as a transceiver unit or a communication unit, and corresponds to the transceiver unit 1100 in FIG. 9. Optionally, the transceiver unit 3100 may also be referred to as a transceiver, a transceiver circuit, or the like, and may include at least one antenna 3101 and a radio frequency unit 3102. Optionally, the transceiver unit 3100 may include a receiving unit and a sending unit. The receiving unit may correspond to a receiver (or referred to as a receiver circuit), and the sending unit may correspond to a transmitter (or referred to as a transmitter circuit). The RRU 3100 is mainly configured to receive and send radio frequency signals and perform conversion between a radio frequency signal and a baseband signal. The BBU 3200 is mainly configured to: perform baseband processing, control the base station, and so on. The RRU 3100 and the BBU 3200 may be physically disposed together, or may be physically disposed separately; to be specific, the base station is a distributed base station.

The BBU 3200 is a control center of the base station, or may be referred to as a processing unit. The BBU 3200 may correspond to the processing unit 1200 in FIG. 9, and is mainly configured to implement a baseband processing function, for example, channel coding, multiplexing, modulation, or spreading. For example, the BBU (the processing unit) may be configured to control the base station to perform operation procedures related to the network device in the foregoing method embodiments, for example, to generate the configuration information reported by the CSI.

In an example, the BBU 3200 may include one or more boards, and a plurality of boards may jointly support a radio access network (such as an LTE network) having a single access standard, or may separately support radio access networks (such as an LTE network, a 5G network, or another network) having different access standards. The BBU 3200 further includes a memory 3201 and a processor 3202. The memory 3201 is configured to store necessary instructions and data. The processor 3202 is configured to control the base station to perform a necessary action, for example, configured to control the base station to perform an operation procedure related to the network device in the foregoing method embodiments. The memory 3201 and the processor 3202 may serve one or more boards. In other words, the memory and the processor may be separately disposed on each board. Alternatively, a plurality of boards may share a same memory and a same processor. In addition, a necessary circuit may be further disposed on each board.

It should be understood that the base station 3000 shown in FIG. 11 can implement processes related to the network device in the foregoing method embodiments. Operations and/or functions of modules in the base station 3000 are separately intended to implement corresponding procedures in the foregoing method embodiments. For details, refer to the descriptions in the foregoing method embodiments. To avoid repetition, detailed descriptions are properly omitted herein.

The BBU 3200 may be configured to perform an action that is implemented inside the network device and that is described in the foregoing method embodiments, and the RRU 3100 may be configured to perform an action of receiving or sending that is performed by the network device from or to the terminal device and that is described in the foregoing method embodiments. For details, refer to the descriptions in the foregoing method embodiments. Details are not described herein again.

According to the methods provided in the embodiments of this application, this application further provides a computer program product. The computer program product includes computer program code. When the computer program code is run on a computer, the computer is enabled to perform the methods on the terminal device side in the embodiments shown in FIG. 3 to FIG. 5, FIG. 7, and FIG. 8.

According to the methods provided in the embodiments of this application, this application further provides a computer-readable medium. The computer-readable medium stores program code. When the program code is run on a computer, the computer is enabled to perform the methods on the first network device side in the embodiments shown in FIG. 3 to FIG. 5 and FIG. 7.

According to the methods provided in the embodiments of this application, this application further provides a system. The system includes the foregoing one or more terminal devices and the foregoing one or more network devices.

An embodiment of this application further provides a processing apparatus, including a processor and an interface. The processor is configured to perform the communication method in any one of the foregoing method embodiments.

It should be understood that the processing apparatus may be a chip. For example, the processing apparatus may be a field programmable gate array (field programmable gate array, FPGA), or may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processing unit (central processor unit, CPU), may be a network processor (network processor, NP), may be a digital signal processing circuit (digital signal processor, DSP), may be a micro controller unit (micro controller unit, MCU), and may be a programmable logic device (programmable logic device, PLD) or another integrated chip. The processor may implement or perform the methods, the steps, and logical block diagrams that are disclosed in the embodiments of this application. The general-purpose processor may be a microprocessor, or the processor may be any conventional processor, or the like. Steps of the methods disclosed with reference to the embodiments of this application may be directly performed and completed by a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It may be understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memories in the systems and methods described in this specification include but are not limited to these memories and any memory of another suitable type.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, all or some of the procedure or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The network device and the terminal device in the foregoing apparatus embodiments completely correspond to the network device and the terminal device in the method embodiments. A corresponding module or unit performs a corresponding step. For example, the communication unit (transceiver) performs a receiving or sending step in the method embodiments, and a step other than the sending step and the receiving step may be performed by the processing unit (processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that is run on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local or remote process, for example, based on a signal having one or more data packets (for example, data from two components interacting with another component in a local system, a distributed system, or across a network such as the internet interacting with other systems by using the signal).

It should be understood that "an embodiment" mentioned in the whole specification particular features, structures, or characteristics related to the embodiment are included in at least one embodiment of this application. Therefore, the embodiments in the whole specification are not necessarily same embodiments. In addition, these particular features, structures, or characteristics may be combined in one or more embodiments in any proper manner.

It should be understood that, in the embodiments of this application, numbers "first", "second", and the like are merely used to distinguish between different objects, for example, to distinguish between different network devices, and do not constitute a limitation on the scope of the embodiments of this application. The embodiments of this application are not limited thereto.

It should be further understood that, in this application, "when" and "if' mean that a network element performs corresponding processing in an objective situation, and are not intended to limit time, and the network element is not necessarily required to have a determining action during implementation, and do not mean any other limitation.

It should be further understood that in the embodiments of this application, "B corresponding to A" indicates that B is associated with A, and B may be determined based on A. However, it should be understood that determining B based on A does not mean that B is determined based on only A, but B may alternatively be determined based on A and/or other information.

It should also be understood that the term "and/or" in this specification describes only an association relationship for describing associated objects and indicates that three relationships may exist. For example, A and/or B may indicate the following three cases: Only A exists, both A and B exist, and only B exists. In addition, the character "/" in this specification usually indicates an "or" relationship between the associated objects.

Unless otherwise specified, an expression used in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that, in the embodiments of this application, the terminal device and/or the network device may perform some or all steps in the embodiments of this application. These steps or operations are merely examples. In the embodiments of this application, other operations or variations of various operations may be further performed. In addition, the steps may be performed in a sequence different from a sequence presented in the embodiments of this application, and not all operations in the embodiments of this application may be performed.

A person of ordinary skill in the art may be aware that, in combination with the examples described in the embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatuses, and units, reference may be made to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, configuration information from a first network device;
measuring, by the terminal device based on the configuration information, a channel state information-reference signal CSI-RS and a synchronization signal block SSB that are sent by a first cell;
determining, by the terminal device, that a measurement result of the CSI-RS and a measurement result of the SSB of the first cell satisfy a preset condition; and
sending, by the terminal device, a first report to the first network device, wherein the first report comprises identification information of the first cell.

2. The method according to claim 1, wherein the first report further comprises the measurement result of the CSI-RS and/or the measurement result of the SSB of the first cell.

3. The method according to claim 1 or 2, wherein that a measurement result of the CSI-RS and a measurement result of the SSB satisfy a preset condition comprises: a difference between a measurement value of the CSI-RS and a measurement value of the SSB satisfies a difference threshold.

4. The method according to claim 3, wherein the configuration information comprises the difference threshold.

5. The method according to claim 1 or 2, wherein that a measurement result of the CSI-RS and a measurement result of the SSB satisfy a preset condition comprises:
a measurement value of the SSB satisfies a first quality threshold; and a measurement value of the CSI-RS satisfies a second quality threshold.

6. The method according to claim 5, wherein the configuration information comprises the first quality threshold and the second quality threshold.

7. The method according to any one of claims 3 to 6, wherein the measurement value is any one of the following:
received signal code power RSCP, reference signal received power RSRP, reference signal received quality RSRQ, a signal-to-noise ratio SNR, a signal to interference plus noise ratio SINR, and a reference signal strength indication RSSI.

8. A communication method, comprising:
sending, by a first network device, configuration information to a terminal device, wherein the configuration information is used to configure the terminal device to measure a channel state information-reference signal CSI-RS and a synchronization signal block SSB that are sent by a first cell; and
receiving, by the first network device, a first report from the terminal device, wherein the first report comprises identification information of the first cell, and a measurement result of the CSI-RS and a measurement result of the SSB of the first cell satisfy a preset condition.

9. The method according to claim 8, wherein the first report further comprises the measurement result of the CSI-RS and the measurement result of the SSB of the first cell.

10. The method according to claim 8 or 9, wherein the method further comprises:
determining, by the first network device based on the first report, that a second network device corresponding to the first cell is a fake base station.

11. The method according to any one of claims 8 to 10, wherein that a measurement result of the CSI-RS and a measurement result of the SSB satisfy a preset condition comprises: a difference between a measurement value of the CSI-RS and a measurement value of the SSB satisfies a difference threshold.

12. The method according to claim 11, wherein the configuration information comprises the difference threshold.

13. The method according to any one of claims 8 to 10, wherein that a measurement result of the CSI-RS and a measurement result of the SSB satisfy a preset condition comprises:
a measurement value of the SSB satisfies a first quality threshold; and
a measurement value of the CSI-RS satisfies a second quality threshold.

14. The method according to claim 13, wherein the configuration information comprises the first quality threshold and the second quality threshold.

15. The method according to any one of claims 11 to 14, wherein the measurement value is any one of the following:
received signal code power RSCP, reference signal received power RSRP, reference signal received quality RSRQ, a signal-to-noise ratio SNR, a signal to interference plus noise ratio SINR, and a reference signal strength indication RSSI.

16. The method according to any one of claims 8 to 15, wherein the method further comprises:
receiving, by the first network device, CSI-RS configuration information from a third network device.

17. A communication apparatus, comprising:
a transceiver unit, configured to receive configuration information from a first network device; and
a processing unit, configured to: measure, based on the configuration information, a channel state information-reference signal CSI-RS and a synchronization signal block SSB that are sent by a first cell; and determine that a measurement result of the CSI-RS and a measurement result of the SSB of the first cell satisfy a preset condition, wherein
the transceiver unit is further configured to send a first report to the first network device, wherein the first report comprises identification information of the first cell.

18. The apparatus according to claim 17, wherein the first report further comprises the measurement result of the CSI-RS and/or the measurement result of the SSB of the cell.

19. The apparatus according to claim 17 or 18, wherein that a measurement result of the CSI-RS and a measurement result of the SSB satisfy a preset condition comprises: a difference between a measurement value of the CSI-RS and a measurement value of the SSB satisfies a difference threshold.

20. The apparatus according to claim 19, wherein the configuration information comprises the difference threshold.

21. The apparatus according to claim 17 or 18, wherein that a measurement result of the CSI-RS and a measurement result of the SSB satisfy a preset condition comprises:
a measurement value of the SSB satisfies a first quality threshold; and a measurement value of the CSI-RS satisfies a second quality threshold.

22. The apparatus according to claim 21, wherein the configuration information comprises the first quality threshold and the second quality threshold.

23. A communication apparatus, comprising:
a transceiver unit, configured to send configuration information to a terminal device, wherein the configuration information is used to configure the terminal device to measure a channel state information-reference signal CSI-RS and a synchronization signal block SSB that are sent by a first cell, wherein
the transceiver unit is further configured to receive a first report from the terminal device, wherein the first report comprises identification information of the first cell, and a measurement result of the CSI-RS and a measurement result of the SSB of the first cell satisfy a preset condition.

24. The apparatus according to claim 23, wherein the first report further comprises the measurement result of the CSI-RS and the measurement result of the SSB of the first cell.

25. The apparatus according to claim 23 or 24, wherein the apparatus further comprises:
a processing unit, configured to determine, based on the first report, that a second network device corresponding to the first cell is a fake base station.

26. The apparatus according to any one of claims 23 to 25, wherein that a measurement result of the CSI-RS and a measurement result of the SSB satisfy a preset condition comprises: a difference between a measurement value of the CSI-RS and a measurement value of the SSB satisfies a difference threshold.

27. The apparatus according to claim 26, wherein the configuration information comprises the difference threshold.

28. The apparatus according to any one of claims 23 to 25, wherein that a measurement result of the CSI-RS and a measurement result of the SSB satisfy a preset condition comprises:
a measurement value of the SSB satisfies a first quality threshold; and a measurement value of the CSI-RS satisfies a second quality threshold.

29. The apparatus according to claim 28, wherein the configuration information comprises the first quality threshold and the second quality threshold.

30. The apparatus according to any one of claims 23 to 29, wherein the transceiver unit is further configured to receive CSI-RS configuration information from a third network device.
